# EUROPÄISCHE PATENTSCHRIFT

(11) **EP 0 883 537 B1**
(45) Veröffentlichungstag und Bekanntmachung des Hinweises auf die Patenterteilung: **27.02.2002**
(21) Anmeldenummer: 97949899.5
(22) Anmeldetag: 10.11.1997
(51) Int. Cl.: B60T 13/12, B60T 13/66, B60T 8/44, B60T 8/88

(54) **HYDRAULISCHE FAHRZEUGBREMSANLAGE**
HYDRAULIC VEHICLE BRAKING SYSTEM
SYSTEME DE FREINAGE HYDRAULIQUE POUR VEHICULE

(30) Priorität: 20.12.1996 DE 19653308
(43) Veröffentlichungstag der Anmeldung: 16.12.1998
(73) Patentinhaber: ROBERT BOSCH GMBH, 70442 Stuttgart (DE)
(72) Erfinder: JONNER, Wolf-Dieter, D-71717 Beilstein (DE); ENGFER, Ortwin, D-70499 Stuttgart (DE); VAN ZANTEN, Anton, D-71254 Ditzingen (DE); BINDER, Jürgen, D-70599 Stuttgart (DE); PFAU, Martin, D-71287 Weissach (DE); SCHUNCK, Eberhadt, D-76829 Landau (DE); KÄSSMANN, Andreas, D-70839 Gerlingen (DE); HACHTEL, Jürgen, D-74219 Möckmühl (DE); GOTTWICK, Ulrich, D-70192 Stuttgart (DE); SCHUBERT, Michael, D-75382 Althengstett (DE)
(86) Internationale Anmeldenummer: DE9702619
(87) Internationale Veröffentlichungsnummer: WO9828174

(56) Entgegenhaltungen:
- EP-A- 0 355 324
- EP-A- 0 365 769
- DE-A- 2 450 874
- DE-A- 3 247 497
- DE-A- 3 444 827

## Beschreibung

### Stand der Technik

Die Erfindung geht aus von einer hydraulischen Fahrzeugbremsanlage nach der Gattung des Hauptanspruchs.

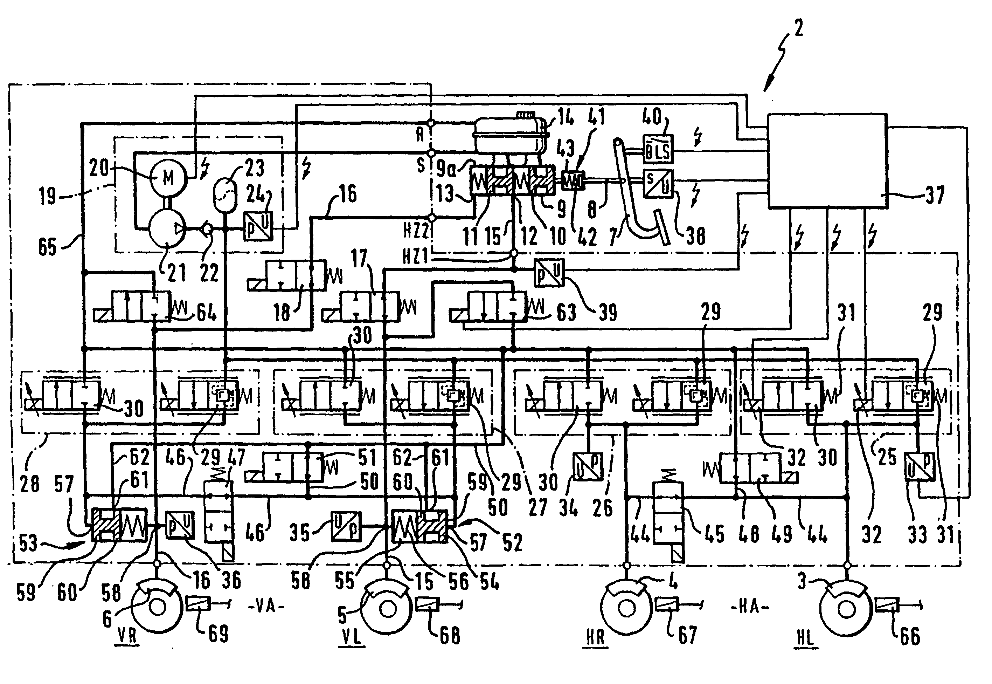

Durch die Figuren 1 und 2 des SAE-Papers 96 0991 sind zwei hydraulische Fahrzeugbremsanlagen mit vier Radbremsen bekannt zum Bremsen von vier auf zwei Fahrzeugachsen verteilten Rädern mittels hydraulischer Fremdenergie im normalen Bremsbetrieb, dem Betriebsbremsbetrieb, und notfalls, beispielsweise bei Mangel oder Fehlen von hydraulischer Fremdenergie oder elektrischer Energie zum Steuern von Ventilen, wenigstens von zwei Rädern mittels Muskelkraftenergie im sogenannten Hilfsbremsbetrieb. Für den Betriebsbremsbetrieb weisen beide Fahrzeugbremsanlagen eine hydraulische Fremdenergiequelle mit Vorratsbehälter, Pumpe und Druckspeicher und zwischen dieser Fremdenergiequelle und jeder der vier Radbremsen eine elektrisch steuerbare Bremsventilanordnung auf, die wenigstens mittelbar steuerbar sind in Abhängigkeit eines Bremswertsignals aus einem mittels eines Bremspedals einstellbaren Bremswertgeber. Für den Hilfsbremsbetrieb weist die erste Fahrzeugbremsanlage einen mittels des Bremspedals betätigbaren einkreisig ausgebildeten Hauptbremszylinder und an diesen angeschlossen ein Betriebsartenumschaltventil auf, das normalerweise offen steht und durch das hindurch per Betätigung des Bremspedals die Radbremsen der vorderen Pahrzeugachse betätigbar sind mittels Druckmittel aus dem Hauptbremszylinder. Die zweite Fahrzeugbremsanlage weist für den Hilfsbremsbetrieb einen mittels des Bremspedals betätigbaren zweikreisig ausgebildeten Hauptbremszylinder sowie an diesen angeschlossen ein erstes und ein zweites Betriebsartenumschaltventil auf, wobei die Vorderradbremsen durch das erste und die Hinterradbremsen durch das zweite Betriebsartenumschaltventil versorgbar sind. Die Betriebsbremsventilanordnungen der zweiten hydraulischen Fahrzeugbremsanlage bestehen jeweils aus einem ersten und einem zweiten normal geschlossenen 2-Anschlüsse-Ventil des Typs "Drosselndes Proportionalwegeventil". Dabei bildet jeweils das erste drosselnde Proportionalwegeventil ein Ventil zum Erhöhen von Bremsdruck und das zweite drosselnde Proportionalwegeventil ein Ventil zum Absenken von Bremsdruck in der jeweils zugeordneten Radbremse. Dabei ist jeder Radbremse ein Drucksensor zugeordnet zur Rückmeldung des jeweils in der Radbremse vorhandenen Bremsdruckes an einen Regler, dem das Bremswertsignal des per Bremspedal verstellbaren Bremswertgebers unverändert oder verändert zur Verfügung steht und der infolge von festgestellten Regelabweichungen die drosselnden Proportionalwegeventile der den Radbremsen zugeordneten Betriebsbremsventilanordnungen steuert im Sinne einer Verkleinerung der Regelabweichungen. Beispielsweise ist wenigstens eines der dem Bremsdruckerhöhen dienenden drosselnden Proportionalwegeventile weitergebildet für eine Druckbegrenzungsfunktion zum Schutz der hydraulischen Fremdenergiequelle vor Drucküberlastung. Beispielsweise gemäß der Voranmeldung DE 196 36 432.9 sind die genannten drosselnden Proportionalwegeventile austauschbar gegen elektrisch bzw. elektromagnetisch steuerbare Proportionaldruckventile des Typs "Differenzdruckregelventil". Unter Beibehaltung der für die vorbekannte hydraulische Fahrzeugbremsanlage verwendeten Radbremsdrucksensoren sind Bremsdrücke ebenfalls einregelbar, so daß herstellungsbedingte Toleranzen der Proportionaldruckventile kompensierbar sind.

Eine durch die DE 40 37 662 A1 bekannte hydraulische Fahrzeugbremsanlage mit vier auf zwei Fahrzeugachsen verteilten Radbremsen besitzt einen mittels eines Bremspedals betätigbaren zweikreisigen Hauptbremszylinder und nachgeordnet zwei Betriebsartenumschaltventile in Form von 2/2-Wegeventilen, die normal offen stehen, zur Versorgung der vorderen und der hinteren Radbremsen im Hilfsbremsbetrieb mittels Muskelkraftenergie, die dem Bremspedal zugeführt wird. Für Betriebsbremsungen besitzt diese hydraulische Fahrzeugbremsanlage eine hydraulische Fremdenergiequelle und für beide Hinterradbremsen gemeinsam eine Zylinder-Kolben-Anordnung und zwischen dieser und der Fremdenergiequelle eine gemeinsame Betriebsbremsventilanordnung, die hier in einfacher Weise aus zwei Stück 2/2-Wegeventilen besteht. Auch für beide Vorderradbremsen gemeinsam ist eine Kombination aus einer Zylinder-Kolben-Anordnung und einer zwischen dieser und der hydraulischen Fremdenergiequelle angeordneten Betriebsbremsventilanordnung vorgesehen, wobei diese Zylinder-Kolben-Anordnung komplizierter ausgebildet ist zum Zweck einer Bremskraftverteilung zwischen Vorderrädern und Hinterrädern. Die Zylinder-Kolben-Anordnungen verhindern eine Vermischung des Druckmittels der hydraulischen Fremdenergiequelle mit dem dem Hauptbremszylinder und den Radbremsen gemeinsamen Druckmittel mit dem Vorteil, daß von einer Pumpe der hydraulischen Fremdenergiequelle angesaugte Luft oder/und Energiespeichergas, das innerhalb eines als Membranspeicher oder als Kolbenspeicher ausgebildeten Fremdenergiespeichers enthalten ist und in das hydraulische Druckmittel gelangen könnte, nicht in eine Radbremse gerät. Denn dort könnte die Luft oder das Gas kompressible Blasen bilden und dadurch einen Hilfsbremsbetrieb mit der an sich sehr beschränkten Pumpkapazität des Hauptbremszylinders gefährden. Durch Anordnung jeweils eines zusätzlichen normal offenstehenden 2/2-Wegeventils zwischen der jeweiligen Zylinder-Kolben-Anordnung und den jeweils zugeordneten Radbremsen ist es möglich, durch zeitweiliges Schließen des einen oder anderen 2/2-Wegeventils und durch Verschieben des zugeordneten Kolbens der Zylinder-Kolben-Anordnung im Zeitmultiplexbetrieb Bremsdrücke in linken und rechten Radbremsen unterschiedlich zu verändern zum Regulieren von Radschlüpfen wenigstens bei exzessiver Bremspedalbetätigung. Der Zeitmultiplexbetrieb verhindert, daß gleichzeitig in der linken und der rechten Radbremse einer Fahrzeugachse Bremsdrücke in gegenläufigem Sinne veränderbar sind, d. h., daß der eine Bremsdruck nicht ansteigen kann, während der andere abgesenkt wird.

Durch die DE 34 23 944 A1 ist ein Fremdkraftbremskreis bekannt für eine linke und eine rechte Radbremse einer Achse. Jeder Radbremse ist ein eigenes Mehrstellungsventil zugeordnet zum Einregulieren von Bremsdruck unter Überwachung mittels eines Drucksensors oder aber zum Vermeiden von nachteilig großem Radschlupf beim Bremsen. Beide Mehrstellungsventile sind angeschlossen an ein normal geschlossenes Zweistellungsventil, das seinerseits an einen Druckvorratsbehälter angeschlossen ist. Dabei sind die Ventile so ausgebildet, daß ihre Elektromagnete nur anläßlich des Erzeugens oder Änderns von Bremsdrücken mit elektrischem Erregungsstrom zu beaufschlagen sind. Weil infolge einer nicht ausschließbaren Undichtheit von ventilelementepaarungen, die zwischen dem Vorratsbehälter und den Radbremsen angeordnet sind, nicht ausschließbar ist, daß trotz vorhandener Radbremsdrucksensoren unerwünschter Radbremsdruck entstehen könnte, ist dem Fremdkraftbremskreis ein Druckentlastungsventil zugeordnet, das in Form eines elektrisch steuerbaren 2/2-Wegeventils, das normal offensteht, ausgebildet ist. Durch das genannte Zweistellungsventil sickerndes Druckmittel findet dadurch einen Weg weg von den Radbremsen. Anläßlich von Bremsungen wird das Druckentlastungsventil geschlossen, so daß ein Radbremsdruck notfalls steigerbar ist bis auf denjenigen Druck, der in dem Druckvorratsbehälter herrscht.

### Vorteile der Erfindung

Die hydraulische Fahrzeugbremsanlage mit den kennzeichnenden Merkmalen des Anspruchs 1 vereinigt in sich das Fernhalten von Luft oder Gas, das sich im Druckmittel der hydraulischen Fremdenergiequelle befindet, aus den Radbremsen der am stärksten an der Fahrzeugverzögerung beteiligten Fahrzeugachse zum Vorteil von Hilfsbremsungen bei dem gleichzeitig vorhandenen Vorteil, daß in der linken und der rechten Radbremse dieser Fahrzeugachse beispielsweise gleichzeitig Bremsdruckänderungen in gegenläufigem Sinne durchführbar sind, was insbesondere während einer Verzögerung des Fahrzeugs von Vorteil ist bei einer gleichzeitigen Weiterverwendung der Radbremsen zum automatischen Stabilisieren des Fahrzeugs um seine Hochachse, beispielsweise bei Kurvenfahrt. Links und rechts automatisch unterschiedlich eingestellte Bremsdrücke bewirken ein Giermoment im Sinne einer Stabilisierung des Fahrzeugs um die Hochachse und helfen dem Fahrzeugführer auch beim Einlenken in eine Kurve und beim Auslenken. Ein solches Stabilisieren wird beispielsweise mit Fahrdynamikregelung bezeichnet und ist umfangreich beschrieben in "Kraftfahrtechnisches Taschenbuch", Bosch, 22. Auflage, Düsseldorf, VDI-Verlag, 1995, ISBN 3-18-419122-2.

Durch die in den Unteransprüchen aufgeführten Maßnahmen sind vorteilhafte Weiterbildungen und Verbesserungen der im Hauptanspruch angegebenen hydraulischen Fahrzeugbremsanlage möglich. Die kennzeichnenden Merkmale des Anspruchs 2 ergeben ein Ausführungsbeispiel, das den häufigsten Anwendungsfall, nämlich eine Fahrzeugbremsanlage für einen Personenkraftwagen erfaßt. Das Ausführungsbeispiel mit den kennzeichnenden Merkmalen des Anspruchs 3 kann demgegenüber die Fahrzeugbremsanlage eines Lastwagens, vorzugsweise eines solchen mit doppelt bereiften Hinterrädern, sein.

Die kennzeichnenden Merkmale des Anspruchs 4 ergeben den Vorteil, daß Undichtheit eines für die Durchführung von Hilfsbremsbetrieb bestimmten Dichtungsringes durch Betätigung des Bremspedals im Hilfsbremsmodus erkennbar ist durch außergewöhnliches Absinken des Bremspedals.

Die kennzeichnenden Merkmale des Anspruches 5 ergeben den Vorteil, daß eine infolge gegebenenfalls beträchtlicher Erwärmung von Druckmittel in den Radbremsen der am stärksten zur Fahrzeugverzögerung beitragenden Fahrzeugachse stattfindende Volumenausdehnung kompensierbar ist, während das Betriebsartenumschaltventil anläßlich einer andauernden Betätigung des Bremspedals und eines dabei gegebenenfalls ablaufenden Bremsschlupfregelbetriebs geschlossen ist. Wenn gegebenenfalls durch die genannte Volumenausdehnung anläßlich einer Bremsdruckverminderung insbesondere zum Zweck der Radschlupfminderung beim Fahren über Glatteis die Kolben der Zylinder-Kolben-Anordnungen vorzeitig ihre Ausgangsstellung einnehmen, ist das Einstellen niedrigerer Bremsdrücke möglich.

Die kennzeichnenden Merkmale des Anspruches 6 ergeben einerseits den für die durch das SAE-Paper 96 0991 vorbekannte zweite hydraulische Bremsanlage offenbarten Vorteil von im normalen Betriebsbremsbetrieb an einer linken und einer rechten Radbremse der gleichen Fahrzeugachse gleich großen Bremsdrücken zur Vermeidung von störendem Giermoment und andererseits in preisgünstiger Weise zusätzlich den Vorteil der Vermeidung von ungewolltem Bremsdruck anläßlich von Ventilundichtheit im Zusammenhang mit nachteilig großer Drift wenigstens eines Bremsdrucksensors oder des Bremswertgebers. Die Entlastungsventile sind bezüglich Bremsdruckabsenkungen redundant zu den Betriebsbremsventilanordnungen.

### Zeichnung

Ein Schaltplan der erfindungsgemäßen hydraulischen Fahrzeugbremsanlage ist in der Figur dargestellt und nachfolgend näher beschrieben.

### Beschreibung des Ausführungsbeispiels

Die erfindungsgemäße hydraulische Fahrzeugbremsanlage 2 gemäß der Figur besitzt hydraulisch betätigbare Radbremsen 3, 4, 5 und 6, zur Durchführung von Hilfsbremsungen mit Muskelkraft ein Bremspedal 7 und einen über eine Pedalstange 8 bei Ausübung von Kraft auf das Bremspedal 7 steuerbaren Hauptbremszylinder 9, der zweikreisig ausgebildet ist und dafür einen ersten Hauptbremszylinderkolben 10, einen zweiten Hauptbremszylinderkolben 11, dem ersten Hauptbremszylinderkolben 10 zugeordnet einen ersten Hauptbremszylinderanschluß 12 und dem zweiten Hauptbremszylinderkolben 11 zugeordnet einen zweiten Hauptbremszylinderanschluß 13 sowie zu seiner Versorgung einen Vorratsbehälter 14 aufweist. Die Hauptbremszylinderkolben 10 und 11 sowie der Vorratsbehälter 14 einschließlich eines Gehäuses 9a sind mit aus dem Stand der Technik entnehmbaren Konstruktionsmerkmalen herstellbar. Vom ersten Hauptzylinderanschluß 12 geht eine erste Hilfsbremsleitung 15 aus, die zur Radbremse 5 führt. Die Radbremse 5 ist vorzugsweise eine Vorderradbremse. In gleicher Weise geht von dem zweiten Hauptbremszylinderanschluß 13 eine zweite Hilfsbremsleitung 16 aus, die zu der zweiten Vorderradbremse 6 führt. In beide Hilfsbremsleitungen 15 und 16 ist je ein Betriebsartenumschaltventil 17 bzw. 18 eingebaut, die hier als technisch einfache 2/2-Wegeventil des normal offenstehenden Typs ausgebildet und hier elektrisch steuerbar sind. Demzufolge hat in an sich bekannter Weise eine Betätigung des Bremspedals 7 eine Übertragung von Muskelkraftenergie über die Pedalstange 8 eine Verschiebung des ersten Hauptzylinderkolbens 9 und einen Druckanstieg am ersten Hauptbremszylinderanschluß 12 und schließlich eine Verschiebung des zweiten Hauptbremszylinderkolbens 11 mit einem Druckanstieg am zweiten Hauptbremszylinderanschluß 13 zur Folge. Die Druckanstiege in den Hauptbremszylinderanschlüssen 12 und 13 pflanzen sich in bekannter Weise durch die Hilfsbremsleitungen 15 und 16 und die offenstehenden Betriebsartenumschaltventile 17 und 18 in die Radbremsen 5 und 6 fort zum Bremsen von nicht dargestellten Vorderrädern eines damit ausgerüsteten Fahrzeugs. Insoweit ist die hydraulische Fahrzeugbremsanlage für den Muskelkraftbremsbetrieb, der der notfalls nötige Hilfsbetrieb sein wird, ausreichend beschrieben. Weil der Fahrzeugbremsanlagenfachmann in der Lage ist, dem Hilfsbremsbetrieb dienende hydraulische Fahrzeugbremsanlagen zu konzipieren, braucht hier nicht darauf eingegangen werden, in welcher Weise die Durchmesser der Hauptbremszylinderkolben 9 und 10 und deren Hübe zu wählen sind in Abhängigkeit von einem Gewicht des Fahrzeugs und seiner Beladung.

Für den Betriebsbremsbetrieb mittels hydraulischer Fremdenergie besitzt die Fahrzeugbremsanlage 2 eine hydraulische Fremdenergiequelle 19, die eine von einem Elektromotor 20 antreibbare Pumpe 21, ein Rückschlagventil 22, einen dem Rückschlagventil 22 nachgeordneten Druckspeicher beispielsweise des Typs mit Membran und Gaspolster, einen Druckfühler 24 zum Messen von Druck im Druckspeicher 23 und Ausgeben des Druckes in Form eines elektrischen Signales sowie den Vorratsbehälter 14 aufweist, den man deshalb als einen integralen Vorratsbehälter bezeichnen kann. Des weiteren dienen dem Betriebsbremsbetrieb per hydraulische Fremdenergie vier Betriebsbremsventilanordnungen 25, 26, 27 und 28, die hier beispielsweise jeweils zwei Ventile 29, 30 enthalten und den Radbremsen 3, 4, 5 und 6 zugeordnet sind. Dabei befinden sich zwei dieser Betriebsbremsventilanordnungen zwischen den Radbremsen 3 und 4 und dem Druckspeicher 23 sowie dem Vorratsbehälter 14 der hydraulischen Fremdenergiequelle 19. Die ersten Ventile 29 und die zweiten Ventile 30 sind hier als normal geschlossene Proportionalwegeventile dargestellt mit Schließfedern 31 und mit variabel erregbaren Elektromagneten 32, so daß zwischen den Schließstellungen, die in den Symbolen mittels der rechten Quadrate charakterisiert sind, und den weitestmöglichen Öffnungsstellungen, die mittels der jeweils linken Quadrate und den Durchgangspfeilen dargestellt sind, beliebig drosselnd wirkende Zwischenstellungen einstellbar sind. Des weiteren sind für den erwähnten Betriebsbremsbetrieb insbesondere wegen der Ausgestaltung der Betriebsbremsventile 25 bis 28 als drosselnde Wegeventile 29, 30 mit den Radbremsen 3, 4, 5 und 6 kommunizierend jeweils Radbremsdrucksensoren 33, 34, 35 und 36 vorgesehen, die elektrische Signale an ein kombiniertes Steuer- und Regelgerät 37 liefern. Damit das Steuergerät 37 steuern bzw. regeln kann, ist hier mit dem Bremspedal 7 ein erster Bremswertgeber 38 verkoppelt und mit dem Steuer- und Regelgerät 37 verbunden. Vorzugsweise aus Gründen der Redundanz ist ein zweiter Bremswertgeber 39 vorgesehen, der hier als ein Drucksensor ausgebildet und an die Hilfsbremsleitung 15 angeschlossen ist. Auch dieser zweite Bremswertsensor 39 ist mit dem Steuer- und Regelgerät 37 verbunden. Beispielsweise ist in preisgünstiger Weise der erste Bremswertgeber 38 als ein elektrisches Potentiometer ausgebildet. Hierfür kann beispielsweise aus dem Stand der Technik ein mittels zwei Widerstandsbahnen und einem Schleifer ausgestattetes ohmsches Potentiometer verwendet werden. Demzufolge kann eine Bremswertvorgabe aus dem ersten Bremswertgeber 38 nur zustandekommen, wenn das Bremspedal 7 bewegbar ist. Weil für den Betriebsbremsbetrieb die Betriebsartenumschaltventile 17 und 18 zu schließen sind, ist beispielsweise mit dem Bremspedal 7 ein sogenannter Bremslichtschalter 40 verkoppelt, der eine erste Bewegung des Bremspedals 7 dem Steuer- und Regelgerät 37 anzeigt, das daraufhin die Betriebsartenumschaltventile 17 und 18 in die Schließstellung steuert. Weil infolge des Schließens dieser Betriebsartenumschaltventile 17 und 18 Druckmittel in den Hauptbremszylinder 9 eingesperrt ist, wodurch die Hauptbremszylinderkolben 10 und 11 nicht weiter verschiebbar sind, ist zwischen das Bremspedal 7 und dem ersten Hauptbremszylinderkolben beispielsweise im Bereich der Pedalstange 8 eine Wegfederanordnung 41 eingebaut. Diese Wegfederanordnung 41 enthält beispielsweise eine Druckfeder 42, die innerhalb eines Gehäuses 43 gefesselt sein kann und dabei eine relativ geringe Vorspannung aufweist. Es bleibt dabei dem Fachmann überlassen, hierfür eine aus Draht gewickelte Feder mit linearer oder progressiver Kennlinie einzubauen. Im Rahmen der hier vorliegenden Erfindung kommt es aber nicht auf die Ausbildung der Wegfederanordnung 41 an. Diese Wegfederanordnung 41 ist nämlich beispielsweise austauschbar gegen eine Wegfederanordnung des bekannten Typs mit Zylinder, Kolben und Feder, die gemäß dem SAE-Paper 96 0991 wie der Drucksensor 39 an den Hauptbremszylinder 9 anschließbar ist.

Mittels der aufgezählten einzelnen Elemente ist zumindest für die Radbremsen 3 und 4, die wie bereits erwähnt Hinterradbremsen sein können, Betriebsbremsbetrieb mittels hydraulischer Fremdenergie möglich. Hierfür überwacht das Steuer- und Regelgerät 37 über den Druckfühler 24 die Leistungsfähigkeit der hydraulischen Fremdenergiequelle 19 und insbesondere den Ladezustand von deren Druckspeicher 23 und den Schaltzustand des Bremslichtschalters 40. Anläßlich einer Betätigung des Bremspedals 7 durch einen Fahrzeugführer und der dadurch erfolgenden Betätigung des Bremslichtschalters 40 erkennt das Steuer- und Regelgerät 37, daß Betriebsbremsbetrieb durchzuführen ist, wofür die Betriebsartenumschaltventile 17 und 18 in die Sperrstellung gesteuert werden.

Nunmehr soll vorerst lediglich der Betriebsbremsbetrieb für die erwähnten Hinterradbremsen 3 und 4 beschrieben werden. Eine Betätigung des Bremspedals 7 hat, wie bereits angedeutet, sowohl eine Verstellung des ersten Bremswertgebers 38 als auch des zweiten Bremswertgebers 39 zur Folge. In zum Stand der Technik gehörender Weise wird für einen ersten Weg des Bremspedals ein Signal aus dem ersten Bremswertgeber 38 vom Steuer- und Regelgerät 37 bevorzugt. In an sich zum Stand der Technik gehörender Weise bildet also dieser erste Bremswertgeber 38 ein Gerät, das einem nicht dargestellten Regler in dem Steuer- und Regelgerät 37 eine Führungsgröße meldet. Istgrößen der Bremsdrücke der Radbremsen 3 und 4 werden von den Radbremsdrucksensoren 33 und 34 dem Regler gemeldet. Aus einer Abweichung zwischen dem Wert der Führungsgröße, die vom Fahrzeugführer willkürlich variierbar ist, aber im Moment einen Sollwert darstellt, und der jeweiligen Größe der Anzeigen aus den Bremsdrucksensoren 33 und 34 resultierende Regelabweichungen werden vom Regler erkannt und in Steuersignale für die Betriebsbremsventilanordnungen 25 und 26 umgesetzt. Infolge der Ausbildung der darin enthaltenen Ventile 29 werden dort, je nach der Stärke der Erregung der Elektromagnete 32, mehr oder weniger große Querschnitte freigegeben für Fremdenergiedruckmittel aus dem Druckspeicher 23 zu den Radbremsen 3 und 4. Dies hat zur Folge, daß in diesen Radbremsen 3 und 4 Bremsdruckanstiege stattfinden, die jeweils als momentane Bremsdrücke von den Bremsdrucksensoren 33 und 34 erfaßt und dem Regler in dem Steuer- und Regelgerät 37 gemeldet werden. Je nach dem, ob der Fahrzeugführer das Bremspedal 7 weiterbewegt oder in teilweiser gedrückter Stellung hält, wird mehr oder weniger schnell eine Annäherung der von den Bremsdrucksensoren 33 und 34 gemeldeten Bremsdrücke an den augenblicklichen Sollwert erfolgen. Ist eine ausreichende Annäherung erfolgt, so beendet das Steuer- und Regelgerät 37 die Erregung der Magnete 32 der ersten Ventile 29 und demzufolge beenden diese Ventile 29 Bremsdruckanstiege. Vermindert nun der Fabrzeugführer seine Kraft auf das Bremspedal 7, so bewegt sich dieses in Richtung seiner Ausgangsstellung. Demzufolge wird die vom ersten Bremswertgeber 38 ausgegebene Führungsgröße kleiner mit der Folge, daß momentan ein kleinerer Sollwert vorliegt gegenüber dem momentan vorhandenen Istwert aus den Radbremsdrucksensoren 33 und 34. Folglich wird der Regler eine Regelabweichung mit nunmehr anderem Vorzeichen feststellen und demgemäß eine Steuerung der zweiten Ventile 30 in den Betriebsventilanordnungen 25 und 26 bewirken. Die Elektromagnete 32 dieser zweiten Ventile 30 stellen dann, beispielsweise in Abhängigkeit der Regelabweichung Abströmquerschnitte zur Verfügung, damit Druckmittel aus den Radbremsen 3 und 4 zum Vorratsbehälter 14 der hydraulischen Fremdenergiequelle 19 zurückkehren kann mit der Folge, daß aus den Radbremsen 3 und 4 ausfließendes Druckmittel Absinken der Radbremsdrücke zur Folge hat. Infolge der vorher erwähnten Progression der Wegfederanordnung 41 sind für relativ geringe Radbremsdrücke relativ lange Bremspedalwege notwendig, so daß eine willkürliche Bremswertvorgabe durch den Fahrzeugführer gut aufgelöst wird und zu feinfühliger Bremsdruckregulierung führt.

Bei kräftigerer Betätigung des Bremspedals 7 wird wegen der erwähnten Progression der Wegfederanordnung 41 der zweite Bremswertgeber 39 einen steileren Signalanstieg aufweisen als der erste Bremswertgeber 38. Dies wird sich das Steuer- und Regelgerät 37 zunutze machen, und deshalb wird die erwähnte kräftigere Betätigung des Bremspedals Führungsgrößen aus dem zweiten Bremswertgeber 39 den Radbremsdruckregelungen zugrundelegen mit dem Vorteil von zügig steigerbarem Bremsdruck.

Seither nicht erwähnt ist eine erste Bremsdruckausgleichsleitung 44 zwischen den Betriebsbremsventilanordnungen 25 und 26 bzw. deren Radbremszylindern 3 und 4 und ein in diese Bremsdruckausgleichsleitung 44 eingebautes Bremsdruckausgleichventil 45, das beispielsweise als ein 2/2-Wegeventil ausgebildet und elektrisch schließbar ist sowie eine zweite Bremsdruckausgleichsleitung 46 zwischen den Betriebsbremsventilanordnungen der Radbremsen 5 und 6 der Vorderräder sowie ein in diese zweite Bremsdruckausgleichsleitung 46 eingebautes zweites Bremsdruckausgleichsventil 47, das beispielsweise wiederum als ein normal offenstehendes elektrisch steuerbares 2/2-Wegeventil ausgebildet ist.

Zur Beschreibung wird der Übersichtlichkeit wegen vorab ausgewählt die Anordnung der ersten Bremsdruckausgleichsleitung 44, die den Radbremsen 3 und 4 der Hinterräder zugeordnet ist. In der gezeichneten Grundstellung, der bereits erwähnten Offenstellung, besteht eine hydraulische Verbindung von der Radbremse 3 zur Radbremse 4 und umgekehrt. Wenn anläßlich einer Betätigung des Bremspedals 7 Bremsdruck in den Radbremsen 3 und 4 zustandekommen soll, so wird das Zustandekommen dieses Bremsdruckes mittels einem der Radbremsdrucksensoren 33 bzw. 34 beobachtet. Der Grund hierfür ist, daß mit ungleichen Anzeigen aus den beiden Radbremsdrucksensoren 33, 34 zu rechnen ist, weil Fertigungstoleranzen und gegebenenfalls störende ungleiche Erwärmung der beiden Radbremsdrucksensoren 33, 34 kaum vermeidbar ist. Beispielsweise wird der Radbremsdrucksensor 33 den Radbremsdruckistwert an den Regler im Steuer- und Regelgerät 37 liefern, damit das Steuer- und Regelgerät 37 beispielsweise die Betriebsbremsventilanordnung 25 und gleichzeitig auch die Betriebsbremsventilanordnung 26 steuern kann im Sinne einer Angleichung von Radbremsdruck an einen mittels des Bremspedals einstellbaren Bremswert. Das Benützen beider Betriebsbremsventile 25 und 26 wird bevorzugt, wenn durch Vorgabe über das Bremspedal 7 ein Radbremsdruck schnell ansteigen soll. Sollte eine Differenz zwischen den Durchströmmengen von Druckmittel durch die beiden Betriebsbremsventilanordnungen 25 und 26 auftreten, so wird die erste Bremsdruckausgleichsleitung mit ihrem offenstehenden ersten Bremsdruckausgleichventil gut genug für Bremsdruckgleichheit in den beiden Radbremsen 3 und 4 sorgen. Wird dagegen das Bremspedal 7 langsam betätigt, so würde ein von einer der beiden Betriebsbremsventilanordnungen 25, 26 bereitstellbarer Querschnitt für einen ausreichend schnellen Bremsdruckanstieg in den beiden Radbremsen 3 und 4 genügen, wobei die erste Bremsdruckausgleichsleitung 44 und das offenstehende erste Bremsdruckausgleichventil für ausreichende Druckgleichheit in den Radbremsen 3 und 4 sorgt. Es kann aber auch der Fall gewollt sein, daß in den Radbremsen 3 und 4 unterschiedliche Bremsdrücke einzustellen sind entweder unter Verwendung der Radbremsdrucksensoren 33 bzw. 34 oder aber ohne Verwendung dieser Raddrucksensoren im Falle, daß links und rechts am Fahrzeug unterschiedlich große Blockiergefahr besteht. In einem solchen Fall wird vom Steuer- bzw. Regelgerät 37 das erste Bremsdruckausgleichventil 45 geschlossen.

Seither nicht angesprochen wurde in der Beispielsbeschreibung die Weiterbildung mit einer ersten Entlastungsleitung 48 und einem ersten Entlastungsventil 49, wobei diese erste Entlastungsleitung 48 an die erste Bremsdruckausgleichsleitung 44 angeschlossen ist und irgendwie mit dem Vorratsbehälter 14 verbunden ist, wobei das erste Entlastungsventil 49 irgendwo in die erste Entlastungsleitung 48 eingebaut ist, normal offen steht und elektrisch schließbar ist. Dieses erste Entlastungsventil 49 ist wiederum als ein 2/2-Wegeventil dargestellt. Das erste Entlastungsventil 49 wird vom Steuer- und Regelgerät 37 in die Schließstellung gesteuert, sobald durch Betätigung des Bremspedals 7 der Bremslichtschalter 40 ein Signal dem Steuer- und Regelgerät 37 zuführt. Nach dem Schließen des ersten Entlastungsventils 49 wird in der vorher beschriebenen Weise Bremsdruck in den Radbremsen 3 und 4 eingestellt. Beim Loslassen des Bremspedals 7 durch den Fahrzeugführer wird der Bremslichtschalter 40 geöffnet und demzufolge öffnet das Steuer- und Regelgerät 37 das erste Entlastungsventil 49 mit der Folge, daß gegebenenfalls, beispielsweise infolge von Anzeigefehlern wenigstens einer der beiden Radbremsdrucksensoren 33 bzw. 34 oder wegen Hängenbleibens wenigstens eines der beiden Ventile 30 in ihren Schließstellungen in den Radbremsen 3 bzw. 4 verbliebener Bremsdruck durch Abfluß von Druckmittel durch das erste Entlastungsventil 49 und die erste Entlastungsleitung 48 hin zum Vorratsbehälter 14 verschwindet.

Analog dazu geht auch von der zweiten Bremsdruckausgleichsleitung 46 eine zweite Entlastungsleitung 50 aus, in die wiederum ein zweites Entlastungsventil 51 eingebaut ist.

Abweichend von dem direkten Anschluß der Radbremse 3 an ihre Betriebsbremsventilanordnung 25 bzw. der Radbremse 4 an deren Betriebsbremsventilanordnung 26 sind die Radbremsen 5 und 6 jeweils mittelbar mittels einer ersten Zylinderkolbenanordnung 52 bzw. einer zweiten Zylinderkolbenanordnung 53 mit Radbremsdruck versorgbar aus den Betriebsbremsventilen 27 bzw. 28. Kolben 54 der Zylinderkolbenanordnungen 52, 53 sind innerhalb von Zylindern 55 abdichtend verschieblich und werden mittels Federn 56 in Grundstellungen bewegt, die in der Figur dargestellt sind. Demgemäß befinden sich die Kolben 54 in der Nähe von Anschlüssen 57, die mit den Betriebsbremsventilanordnungen 27 bzw. 28 verbunden sind. Weitere Anschlüsse 58 in der Nähe der Federn 56 kommunizieren deshalb mit den Radbremsen 5 bzw. 6. Die Kolben 54 haben in angedeuteter Weise beispielsweise zwei Dichtungsringe 59, 60 in axialen Abständen, die größer sind als konstruktiv festgelegte Hübe der Kolben 54. Dabei bleibt es dem Konstrukteur überlassen, in der angedeuteten Weise als Dichtungsringe sogenannte Rundschnurringe oder aber Manschettendichtungen, wie sie in Hauptbremszylindern üblich sind, zu verwenden. Zwischen den Dichtungsringen 59 und 60 sind den Zylindern 55 jeweils eine Leckageabflußöffnung 61 zugeordnet, wobei von diesen Leckageabflußöffnungen 61 eine Abflußleitung 62 in Richtung zum Vorratsbehälter 14 wegführen kann. An sich kann man die Abflußleitung 62 weglassen. Die Abflußleitung 62 ergibt den Vorteil, daß Schmutz und Kondenswasser oder gar salziges Spritzwasser am Eindringen in die Zylinder-Kolben-Anordnungen 52, 53 gehindert werden.

Zur Funktionsbeschreibung für den Betriebsbremsbetrieb mit den Radbremsen 5, 6 per Fremdenergie sollen hier nur das Betriebsartenumschaltventil 18 und die beiden Betriebsbremsventilanordnungen 27 und 28 und die beiden Zylinder-Kolben-Anordnungen 52 und 53 für die Radbremsen 5 und 6 beachtet werden. Eine Betätigung des Bremspedals 7 bewirkt über den Bremslichtschalter 40 und das Steuer- und Regelgerät 37 ein Schließen der Betriebsartenumschaltventile 17 und 18, so daß im Hauptbremszylinder 9 erzeugter Druck nicht zu den Radbremsen 5 und 6 gelangt. In einer für die Betriebsbremsventile 25 und 26 der Radbremsen 3 und 4 bereits beschriebenen Weise werden in Abhängigkeit von der Betätigung des Bremspedals 7 auch beispielsweise beide Betriebsventilanordnungen 27 und 28 gesteuert, wodurch im Falle des Öffnens der dem Bremsdruckaufbauen dienenden Ventile 29 die Kolben 54 beaufschlagt und dadurch gegen die Kräfte der Federn 56 verschoben werden und Druckmittel in die Radbremsen 5 und 6 schieben mit der Folge, daß Bremsdruckanstiege in den Radbremsen 5 und 6 erfolgen. Insoweit besteht zwischen der Bremsdruckerzeugung für die Radbremsen 3 und 4 und die Radbremsen 5 und 6 lediglich der Unterschied, daß Druckmittel durch die Ventile 29 strömt, aber nicht in die Radbremsen 5 und 6 gelangt. Vielmehr wird lediglich Druckmittel, das in den Zylindern 55 im Bereich von den Federn 56 vorrätig gehalten ist, den Radbremsen 5 und 6 zugeführt. Mithin bilden die Kolben 54 samt den Dichtungsringen 59 und 60 Barrieren, die gegebenenfalls in dem Druckmittel, das zuvor durch die Ventile 29 geströmt ist, enthaltenes Gas oder/und Luft am Weiterfluß in die Radbremsen 5 und 6 hindern. Würde gelöstes Gas oder Luft aus dem Druckmittel, das durch die Ventile 29 geflossen ist, in die Radbremsen 5 und 6 gelangen, so würde diese Luft bzw. dieses Gas bei einer Bremsdruckabsenkung möglicherweise Blasen bilden mit dem Nachteil, daß anläßlich eines gegebenenfalls notwendig werdenden Hilfsbremsbetriebs allein mit Muskelkraftenergie und Druckmittel aus dem Hauptbremszylinder 9 keine ausreichende Bremswirkung zustande käme. Erkennbar dienen also die Zylinder-Kolben-Anordnungen 52 und 53 in erfindungsgemäßer Weise der Sicherheit.

Die Leckageabflußöffnungen 61 und die Abflußleitungen 62 haben die Aufgabe, gegebenenfalls entlang den Dichtungsringen 59 eingetretenes Druckmittel, das aus der hydraulischen Fremdenergiequelle 19 stammt, zu entspannen und zum Vorratsbebälter 14 abzuleiten zu dem Zweck, daß gegebenenfalls im Druckmittel gelöstes Gas bzw. Luft nicht die Dichtringe 60 passieren kann, insbesondere dann, wenn in den Radbremsen 5 und 6 Bremsdruck herrscht. Bei abgeschalteter Betriebsbremsanlage, beispielsweise durch Herausziehen eines Zündschlüssels, und deshalb im Hilfsbremsmodus ist per Betätigung des Bremspedals 7 eine gegebenenfalls vorhandene Undichtheit des hauptbremszylinderseitigen Dichtringes 59 erkennbar durch außergewöhnliches Absinken des Bremspedals.

Die den Betriebsbremsventilen 27 und 28 zugeordnete zweite Bremsdruckausgleichsleitung 46 mit dem zugeordneten zweiten Bremsdruckausgleichventil 47 sowie die zweite Entlastungsleitung 50 und das in diese eingebaute zweite Entlastungsventil 51 erfüllen die gleichen Aufgaben wie die bereits beschriebene erste Bremsdruckausgleichsleitung 44 mit dem ersten Bremsdruckausgleichventil 45 und wie die erste Entlastungsleitung 48 mit dem ersten Entlastungsventil 49 und brauchen deshalb nicht weiter beschrieben zu werden.

Beispielsweise mit den Radbremsen 5 und 6 verbunden ist hier je ein normal geschlossenes Volumenableitventil 63 bzw. 64, das in Form eines normal geschlossenen 2/2-Wegeventils ausgebildet ist, vom Steuer- und Regelgerät 37 bedingungsabhängig in die Öffnungsstellung steuerbar ist und dabei sich in eine zum Vorratsbehälter 4 führende Leitung 65 öffnet. Das Öffnen eines oder beider Volumenableitventile 63, 64 wird vom Steuer- und Regelgerät 37 dann gesteuert, wenn bei betätigtem Bremspedal 7 unter Zuhilfenahme der an sich für Bremsdruckabsenkungen bestimmten Ventile 30 der Betriebsbremsventilanordnungen 27 und 28 Bremsdrücke in den Radbremsen 5 bzw. 6 zu hoch bleiben. Solche zu hohen Bremsdrücke können eine Folge sein von Erwärmung der Radbremsen 5 und 6 und dadurch einer Volumenausdehnung desjenigen Druckmittels, das sich in den erwärmten Radbremsen 5 und 6 befindet. Dieses Druckmittel sucht im Prinzip den Weg in die Zylinder-Kolben-Anordnungen 52 bzw. 53 und wird dort auch aufgenommen, solange die Kolben 54 noch in Richtung ihrer Normalstellungen verschiebbar sind. Wenn gegebenenfalls die Kolben 54 ihre Normalstellungen vorzeitig erreicht haben, erkennt dies das Steuer-Regelgerät 37 indirekt daran, daß per Radbremsdrucksensoren 35 und 36 gemessene Radbremsdrücke nicht absenkbar sind auf Werte, die per Betätigung des Bremspedals 7 über wenigstens einen der Bremswertgeber 38, 39 dem Steuer- und Regelgerät 37 vorgegeben werden. Mittels der Volumenableitventile 63 und 64 ist also dafür gesorgt, daß bei einer nachteilig starken Ausdehnung infolge von Erwärmung des Druckmittels der Radbremsen 5 und 6 einer bestimmten Stellung des Bremspedals 7 auch effektiv ein bestimmter Bremsdruck zukommt. Ließe man die Volumenableitventile 63 und 64 weg, so müßte ein Fahrzeugführer einen an sich zu hohen Bremsdruck an einer womöglich zu hohen Fahrzeugverzögerung erkennen und demgemäß als der menschliche Regler das Bremspedal 7 in Richtung seine Grundstellung zurücknehmen. Wenn aber dadurch eine Beendigung des Betriebsbremsbetriebs stattfindet, schlägt der in dem Radbremszylinder 5 und 6 vorhandene Druck anläßlich des Öffnens der Betriebsartenumschaltventile 17 und 18 in den Hauptbremszylinder 9 und kann deshalb über den Hauptbremszylinderkolben 10, die Wegfederanordnung 41 und die Pedalstange 8 sowie das Bremspedal 7 störend auf den Fuß des Fahrers wirken. Prinzipiell ist dadurch die Betriebssicherheit der Fahrzeugbremsanlage nicht gestört, denn durch Niedertreten des Bremspedals 7 kann ein Fahrzeugführer einen nächsten Betriebsbremsvorgang auslösen und erneut eine Fahrzeugverzögerung auswählen.

Die vorhandenen Bremsventilanordnungen 27 und 28 sind, wie dies bereits für die Bremsventilanordnungen 25 und 26 beschrieben ist, auch benützbar zum automatischen Bremsen bzw. zum automatischen Verändern von Bremsdrücken. Ein Fall ist das Begrenzen von Antriebsschlupf, sofern es hier mittels der Radbremsen 5 und 6 durchzuführen ist. Aber auch Bremsschlupfregelbetrieb ist sowohl mit den Betriebsbremsventilanordnungen 25 und 26 als auch den Betriebsbremsventilanordnungen 27 und 28 durchführbar unter Auswertung von Raddrehungssignalen, die in Raddrehungssensoren 66 bis 69, die in an sich bekannter Weise nicht dargestellten und mittels der Radbremsen 3 bis 6 zu bremsenden Räder zugeordnet sind. Signale aus diesen Raddrehungssensoren 66 bis 69 werden in dem Steuer- und Regelgerät 37 auf ihre zeitlichen Abstände überwacht zu dem Zweck, daß Radblockiertendenz erfaßbar ist und im Erfassungsfalle eine Bremswertanzeige aus dem Bremswertsensor 38 oder 39 ignoriert wird zugunsten von wenigstens einer Bremsdruckabsenkung, die in an sich bekannter Weise einer Radblockiertendenz entgegenwirkt und dadurch Radschlupf vermindert und der Beherrschbarkeit des Fahrzeugs dient. Weil die angesprochene Maßnahme zum Vermeiden von Radblockiergefahr auch in Verbindung mit per hydraulischer Fremdenergie betriebenen Fahrzeugbremsanlagen bereits bekannt ist, wird hier nicht weiter eingegangen auf die steuerungstechnischen oder regelungstechnischen Maßnahmen. Ergänzend wird lediglich der Vollständigkeit halber erwähnt, daß infolge der automatischen Veränderbarkeit von Radbremsdrücken im Sinne von automatischer Bremsdruckerzeugung für einen Antriebsschlupfregelbetrieb eine automatische Bremsdruckerzeugung auch nutzbar ist für das in der Beschreibungseinleitung angegebene Stabilisieren des Fahrzeugs um seine Hochachse zwecks besserer Beherrschbarkeit durch automatisches Bremsen zum Zwecke des Erzeugens von stabilisierenden Giermomenten.

Ergänzend wird darauf hingewiesen, daß wenigstens eines der beschriebenen Volumenableitventile 63, 64 vom hierfür eingerichteten Steuer- und Regelgerät 37 auch im Bremsschlupfregelbetrieb öffenbar ist, wenn mittels wenigstens einer der Bremsventilanordnungen 27 bzw. 28 ein jeweiliger Radbremsschlupf nicht auf einen situationsabhängig gewollt niedrigen Wert absenkbar ist infolge einer bereits erwähnten, durch Bremsenerwärmung bedingten Volumenausdehnung des hydraulischen Druckmittels. Dieserart dienen die Volumenableitventile 63, 64 dem sicheren Absenken von Bremsdruck und damit der Beherrschbarkeit eines dieserart ausgestatteten Fahrzeugs.

## Patentansprüche

1. Hydraulische Fahrzeugbremsanlage (2) mit Radbremsen (3,4,5,6) für vier Räder, die auf eine erste und eine zweite Fahrzeugachse verteilt sind, mit einer hydraulischen Fremdenergiequelle (19) und zwischen dieser und den Radbremsen (3,4,5,6) angeordneten elektrisch steuerbaren Betriebsbremsventilanordnungen (25,26,27,28) und mit einem per einem Bremspedal betätigbaren Bremswertgeber (38,40) zum Durchführen von Betriebsbremsungen mittels hydraulischer Fremdenergie unter Benutzung der Betriebsbremsventilanordnungen (25,26,27,28) und mit einem mittels des Bremspedals (7) betätigbaren zweikreisigen Hauptbremszylinder (9,9a) zum Durchführen einer Hilfsbremsung mittels Muskelkraftenergie, wobei zwischen den Hauptbremszylinder (9,9a) und aus diesem versorgbaren Radbremsen (3,4,5,6) je Bremskreis ein normal durchlässiges Betriebsartenumschaltventil (17,18) angeordnet ist, das für den Betriebsbremsbetrieb in eine sperrende Stellung steuerbar ist, und wobei wenigstens die Betriebsbremsventilanordnungen (25,26,27,28) mittels eines Steuer- und Regelgerätes (37) steuerbar sind, **dadurch gekennzeichnet, daß** zwischen die Radbremsen (5, 6) derjenigen Fahrzeugachse, die für den größeren Beitrag zur Fahrzeugbremsung ausgelegt ist, und den zugeordneten elektrisch steuerbaren Betriebsbremsventilanordnungen (27, 28) je eine Zylinder-Kolben-Anordnung (52, 53) zwischengeschaltet ist und, daß die für den größeren Beitrag zur Fahrzeugbremsung ausgelegten Radbremsen (5, 6) an die den beiden Bremskreisen des Hauptbremszylinders (9) zugeordneten Betriebsartenumschaltventile (17, 18) angeschlossen sind.

2. Hydraulische Fahrzeugbremsanlage nach Anspruch 1, **dadurch gekennzeichnet, daß** Radbremsen von Vorderrädern den Zylinder-Kolben-Anordnungen (52, 53) zugeordnet sind.

3. Hydraulische Fahrzeugbremsanlage nach Anspruch 1, **dadurch gekennzeichnet, daß** Radbremsen von Hinterrädern den Zylinder-Kolben-Anordnungen (52, 53) zugeordnet sind.

4. Hydraulische Fahrzeugbremsanlage nach Anspruch 1, **dadurch gekennzeichnet, daß** die Kolben (54) der Zylinder-Kolben-Anordnungen (52, 53) je mit zwei Dichtungsringen (59, 60) ausgerüstet sind, daß axiale Abstände zwischen den Dichtungsringen (59, 60) größer sind als Hübe der Kolben (54) und daß zugeordnete Zylinder (55) Leckageabflußöffnungen (61) aufweisen zwischen den jeweils zwei Dichtungsringen (59, 60).

5. Hydraulische Fahrzeugbremsanlage nach Anspruch 1, 2, 3 oder 4, **dadurch gekennzeichnet, daß** an die Radbremsen (5, 6), die je mit einer Zylinder-Kolben-Anordnung (52, 53) verbunden sind, ein normal geschlossenes Volumenableitventil (63, 64) angeschlossen ist, daß diese Volumenableitventile (63, 64) mit einem Vorratsbehälter (14) der hydraulischen Fremdkraftquelle (19) verbunden sind und von dem Steuer- und Regelgerät (37) öffenbar sind unter der Bedingung, daß eine per Betriebsbremsventile (27, 28) steuerbare Bremsdruckabsenkung oder eine Radbremsschlupfverminderung zu gering ausfällt.

6. Hydraulische Fahrzeugbremsanlage nach einem der Ansprüche 1 bis 5, **dadurch gekennzeichnet, daß** zwischen die Betriebsbremsventile (25, 26) und die Radbremsen (3, 4) einer Fahrzeugachse eine erste Bremsdruckausgleichsleitung (44) mit einem ersten in diese eingebauten und dabei normal offenstehenden Bremsdruckausgleichventil (45) und zwischen die Betriebsbremsventile (27, 28) und die Zylinderkolbenanordnungen (52, 53), die der anderen Fahrzeugachse zugeordnet sind, eine zweite Bremsdruckausgleichsleitung (46) mit einem zweiten eingebauten und normal offenstehenden Bremsdruckausgleichventil (47) eingebaut sind, und daß je ein Anschluß des ersten und des zweiten Bremsdruckausgleichventils (45, 47) mit je einem normal offenstehenden ersten bzw. zweiten Entlastungsventil (49, 51) verbunden ist, wobei die Entlastungsventile (49, 51) durch wenigstens eine Entlastungsleitung (48, 50) mit dem Vorratsbehälter (14) der hydraulischen Fremdenergiequelle (19) verbunden sind und für den Betriebsbremsbetrieb schließbar sind.

## Claims

1. Hydraulic vehicle brake system (2), with wheel brakes (3, 4, 5, 6) for four wheels which are distributed to a first and a second vehicle axle, with a hydraulic external-energy source (19) and electrically controllable service-brake valve arrangements (25, 26, 27, 28) arranged between the latter and the wheel brakes (3, 4, 5, 6), and with a brake-value generator (38, 40), actuable by a brake pedal, for carrying out service braking operations by means of hydraulic external energy, utilizing the service-brake valve arrangements (25, 26, 27, 28), and with a dual-circuit brake master cylinder (9, 9a), actuable by means of the brake pedal (7), for carrying out an auxiliary braking operation by means of muscular-force energy, there being arranged, for each brake circuit, between the brake master cylinder (9, 9a) and wheel brakes (3, 4, 5, 6) capable of being supplied from the latter a normally transmitting operating-mode change-over valve (17, 18) which, for the service braking mode, can be controlled into a blocking position, and at least the service-brake valve arrangements (25, 26, 27, 28) being capable of being controlled by means of a control and regulating unit (37), **characterized in that** between the wheel brakes (5, 6) of that vehicle axle which is designed for the greater contribution to vehicle braking and the associated electrically controllable service-valve brake arrangements (27, 28) is interposed in each case a cylinder/piston arrangement (52, 53), and **in that** the wheel brakes (5, 6) designed for the greater contribution to vehicle braking are connected to the operating-mode change-over valves (17, 18) assigned to the two brake circuits of the brake master cylinder (9).

2. Hydraulic vehicle brake system according to Claim 1, **characterized in that** wheel brakes of front wheels are assigned to the cylinder/piston arrangements (52, 53).

3. Hydraulic vehicle brake system according to Claim 1, **characterized in that** wheel brakes of rear wheels are assigned to the cylinder/piston arrangements (52, 53).

4. Hydraulic vehicle brake system according to Claim 1, **characterized in that** the pistons (54) of the cylinder/piston arrangements (52, 53) are each equipped with two sealing rings (59, 60), **in that** axial distances between the sealing rings (59, 60) are greater than strokes of the pistons (54), and **in that** associated cylinders (55) have leakage outflow orifices (61) between the two sealing rings (59, 60) in each case.

5. Hydraulic vehicle brake system according to Claim 1, 2, 3 or 4, **characterized in that** a normally closed volume discharge valve (63, 64) is connected to the wheel brakes (5, 6) which are connected in each case to a cylinder/piston arrangement (52, 53), **in that** these volume discharge valves (63, 64) are connected to a reservoir (14) of the hydraulic external-energy source (19) and can be opened by the control and regulating unit (37), on condition that a brake-pressure drop or a wheel-brake slip reduction capable of being controlled by service-brake valves (27, 28) is too low.

6. Hydraulic vehicle brake system according to one of Claims 1 to 5, **characterized in that** between the service-brake valves (25, 26) and the wheel brakes (3, 4) of one vehicle axle is installed a first brake-pressure compensating line (44) with a first brake-pressure compensating valve (45) installed in the latter and at the same time normally open, and between the service-brake valves (27, 28) and the cylinder/piston arrangements (52, 53) assigned to the other vehicle axle is installed a second brake-pressure compensating line (46) with a second installed and normally open brake-pressure compensating valve (47), and **in that** in each case a connection of the first and of the second brake-pressure compensating valve (45, 47) is connected in each case to a normally open first and second relief valve (49, 51), the relief valves (49, 51) being connected to the reservoir (14) of the hydraulic external-energy source (19) by means of at least one relief line (48, 50) and being capable of being closed for the service braking mode.

## Revendications

1. Système de freinage hydraulique (2) pour véhicule, commandant les freins (3, 4, 5, 6) des quatre roues disposées sur un premier et un second essieu, comportant
- une source externe (19) d'énergie hydraulique et, entre cette source et les freins de roues (3, 4, 5, 6), des dispositifs (25, 26, 27, 28) de soupapes de freins de service à commande électrique,
- un indicateur (38, 40) de la valeur de freinage actionnable par une pédale de frein, pour exécuter des freinages de service au moyen d'une énergie hydraulique externe, en utilisant les systèmes (25, 26, 27, 28) de soupapes de freins de service,
- un maître-cylindre de freinage (9, 9a) à double circuit, actionnable par la pédale de frein (7) pour produire un freinage auxiliaire au moyen d'une énergie musculaire, avec
- montée dans chaque circuit de freinage entre le maître-cylindre de freinage (9, 9a) et les freins de roue (3, 4, 5, 6) qu'il alimente, une soupape de commutation de mode de freinage (17, 18) normalement ouverte et qui, pour le freinage, est commandée pour passer en position de fermeture, les dispositifs de soupapes de frein de service (25, 26, 27, 28) étant actionnés par un appareil de commande et de régulation (37),
**caractérisé en ce qu'**
entre les freins de roue (5, 6) de l'essieu conçu pour participer au maximum au freinage du véhicule et les dispositifs de soupape de freinage de service (27, 28) à commande électrique associés, est intercalé chaque fois un système à piston-cylindre (52, 53), les freins de roue (5, 6) conçus pour apporter la plus grande contribution au freinage du véhicule étant raccordés aux soupapes (17, 18) de commutation de mode de freinage associés aux deux circuits de freinage du maître-cylindre de frein (9).

2. Système de freinage hydraulique selon la revendication 1,
**caractérisé en ce que**
les freins des roues avant sont associés aux systèmes à cylindre-piston (52, 53).

3. Système de freinage hydraulique selon la revendication 1,
**caractérisé en ce que**
les freins des roues arrière sont associés aux systèmes à cylindre-piston (52, 53).

4. Système de freinage hydraulique selon la revendication 1,
**caractérisé en ce que**
les pistons (54) des systèmes à cylindre-piston (52, 53) sont équipés chacun de deux bagues d'étanchéité (59, 60), les distances axiales entre les bagues d'étanchéité (59, 60) étant supérieures à la course de piston (54) tandis que des cylindres associés (5) présentent des ouvertures (61) d'évacuation des fuites, entre la paire de bagues d'étanchéité (59, 60).

5. Système de freinage hydraulique selon la revendication 1, 2, 3 ou 4
**caractérisé en ce que**
aux freins de roues (5, 6) qui sont reliés chacun à un système à cylindre et piston (52, 53), est raccordée une soupape d'évacuation de volume (63, 64) normalement fermée, et ces soupapes (63, 64) sont reliées à un réservoir d'alimentation (14) de la source externe d'énergie (19) et peuvent être ouvertes par l'appareil de commande et de régulation (37), à la condition qu'ait lieu une trop faible chute de la pression de freinage ou une diminution du patinage des freins de roue commandée par les soupapes de freins de service (27, 28).

6. Système de freinage hydraulique selon l'une quelconques des revendications 1 à 5,
**caractérisé en ce qu'**
entre les soupapes de frein de service (25, 26) et les freins de roue (3, 4) d'un essieu de véhicule est montée une première conduite d'équilibrage de la pression des freins (44) dans laquelle est incorporée une soupape d'équilibrage des freins (45) normalement ouverte, tandis qu'entre les soupapes de frein de service (27, 28) et les systèmes à piston-cylindre (52, 53) associés à l'autre essieu est montée une seconde conduite (46) d'équilibrage de la pression des freins dans laquelle est montée une seconde soupape d'équilibrage de la pression des freins (47) normalement ouverte, chaque raccord de la première et de la seconde soupape d'équilibrage de pression (45, 47) étant relié respectivement à une première et à une seconde soupape de décharge (49, 51) normalement ouverte, les soupapes (49, 51) étant reliées par au moins une conduite de décharge (48, 50) au réservoir d'alimentation (14) de la source externe d'énergie hydraulique (19) et pouvant se fermer pour le fonctionnement des freins de service.
